Europäisches Patentamt

European Patent Office

Office européen des brevets

(11) Veröffentlichungsnummer: **0 199 190 B1**

(12) **EUROPÄISCHE PATENTSCHRIFT**

(45) Veröffentlichungstag der Patentschrift: **26.09.90**

(51) Int. Cl.⁵: **B 01 D 45/12, B 04 C 3/04**

(21) Anmeldenummer: **86104861.9**

(22) Anmeldetag: **09.04.86**

(54) **Abscheiderelement zum Abscheiden von in einem Gasstrom suspendierten Feststoffen mittels Fliehkraft in zylindrischen Wirbelkammern.**

(30) Priorität: **17.04.85 DE 3514275**

(43) Veröffentlichungstag der Anmeldung:
**29.10.86 Patentblatt 86/44**

(45) Bekanntmachung des Hinweises auf die
Patenterteilung:
**26.09.90 Patentblatt 90/39**

(84) Benannte Vertragsstaaten:
**DE FR GB IT**

(56) Entgegenhaltungen:
**GB-A-2 092 484**
**US-A-1 905 779**

(73) Patentinhaber: **Anton Piller GmbH & Co. KG**
**Abgunst 24**
**D-3360 Osterode/Harz (DE)**

(72) Erfinder: **Müller, Friedrich-Ernst, Dipl.-Ing.**
**Willenser Strasse 2a**
**D-3363 Eisdorf (DE)**
Erfinder: **Nothdurft, Jürgen**
**Hasenbacher Weg 1**
**D-3392 Clausthal-Zellerfeld (DE)**

(74) Vertreter: **Gralfs, Harro, Dipl.-Ing.**
**Am Bürgerpark 8**
**D-3300 Braunschweig (DE)**

Courier Press, Leamington Spa, England.

## Beschreibung

Abscheiderelement zurm Abscheiden von in einem Gasstrom suspendierten Feststoffen mittels Fliehkraft in zylindrischen Wirbelkammern.

Die Erfindung bezieht sich auf ein Abscheiderelement nach dem Oberbegriff des Patentanspruches 1.

Bei bekannten Abscheiderelementen der gattungsgemäßen Art (DE-A-32 03 498) sind der Rohlufteinlaß und der Restgasauslaß in gegenüberliegenden Stirnwänden des Abscheiderelementes ausgebildet. Bei Abscheidern mit einer Mehrzahl von Abscheiderelementen dieser Art münden die Auslässe in einer gemeinsamen Kammer, die mit einem Sammelauslaß versehen ist und einer Einlaßkammer gegenüberliegt. Eine derartige Anordnung ist für beengte Platzverhältnisse ungeeignet.

Bei einer bekannten Wirbelkammer mit rotierendem Wirbelrohr (DE-A-27 43 391) ist es bekannt, die Restluft parallel zum Rohlufteinlaß auf der Eingangsseite abzuführen. Es ist hierbei jedoch nicht offenbart, wie eine Mehrzahl von Wirbelkammern in Reihe geschaltet werden kann und wie dabei die Restluftführung gestaltet wird.

Es sind weiter Multizyklone bekannt, bei denen eine Mehrzahl von Einzelzyklonen parallel geschaltet sind (US-A-35 43 931). Für die Führung der Rohluft und der Reinluft sind im Bereich der Einlaßebene gesonderte, quer zur Eintrittsebene liegende Luftführungsgehäuse vorgesehen, deren Ein bzw. Auslaß an einer Seite des Multizyklons in einer zur Achse der Zyklone parallelen Ebene münden. Der Restluftstrom wird in der der Einlaßebene der Zyklone gegenüberliegenden Auslaßebene der Zyklone über ein Auslaßgehäuse abgezogen. An das Auslaßgehäuse ist eine Rohrleitung angeschlossen, mit der die Restluft abgeführt wird.

Aufgabe der Erfindung ist es, ein Abscheiderelement der gattungsgemäßen Art so auszubilden, daß damit aufgebaute Abscheider ein Minimum an Platz und platzraubenden Rohrleitungen benötigen.

Diese Aufgabe wird gemäß der Erfindung gelöst durch die im kennzeichnenden Teil des Patentanspruches 1 herausgestellten Merkmale.

Zweckmäßige Ausgestaltungen von Abscheidern mit einer Mehrzahl von Abscheiderelementen sind Gegenstand der Unteransprüche.

Die Erfindung ist in der Zeichnung beispielsweise veranschaulicht und im nachstehenden im einzelnen anhand der Zeichnung beschrieben.

Fig. 1 zeigt einen Abscheider mit zwei Abscheiderelementen im Längsschnitt durch eines der Abscheiderelemente — Schnitt längs der Linie I-I in Fig. 2 und 3.

Fig. 2 zeigt einen Querschnitt in der Ebene A in Fig. 1 in Richtung des Pfeiles II gesehen.

Fig. 3 zeigt einen Querschnitt in der Ebene B in Fig. 1 in Richtung des Pfeiles III gesehen.

Fig. 4 zeigt eine andere Ausführungsform eines Abscheiders.

Fig. 5 zeigt eine Ansicht des Abscheiders nach Fig. 4 in Richtung des Pfeiles V.

Fig. 6 zeigt einen Schnitt längs der Linie VI-VI in Fig. 5.

Fig. 7 zeigt einen Schnitt längs der Linie VII-VII in Fig. 5.

Fig. 8 zeigt eine weitere Ausführungsform mit zwei Abwandlungen.

Fig. 9 zeigt eine Ansicht der Ausführungsform nach Fig 8 von unten gesehen.

Fig. 10 zeigt eine Aufbaueinheit für eine Abscheidergroßanlage.

Fig. 11 zeigt einen Schnitt längs der Linie XI-XI in Fig 10.

Fig. 12 zeigt einen Schnitt längs der Linie XII-XII in Fig 10.

Fig. 13 zeigt einen Querschnitt durch eine Abscheidergroßanlage mit einer Mehrzahl von Abscheidern nach Fig. 10 bis 12.

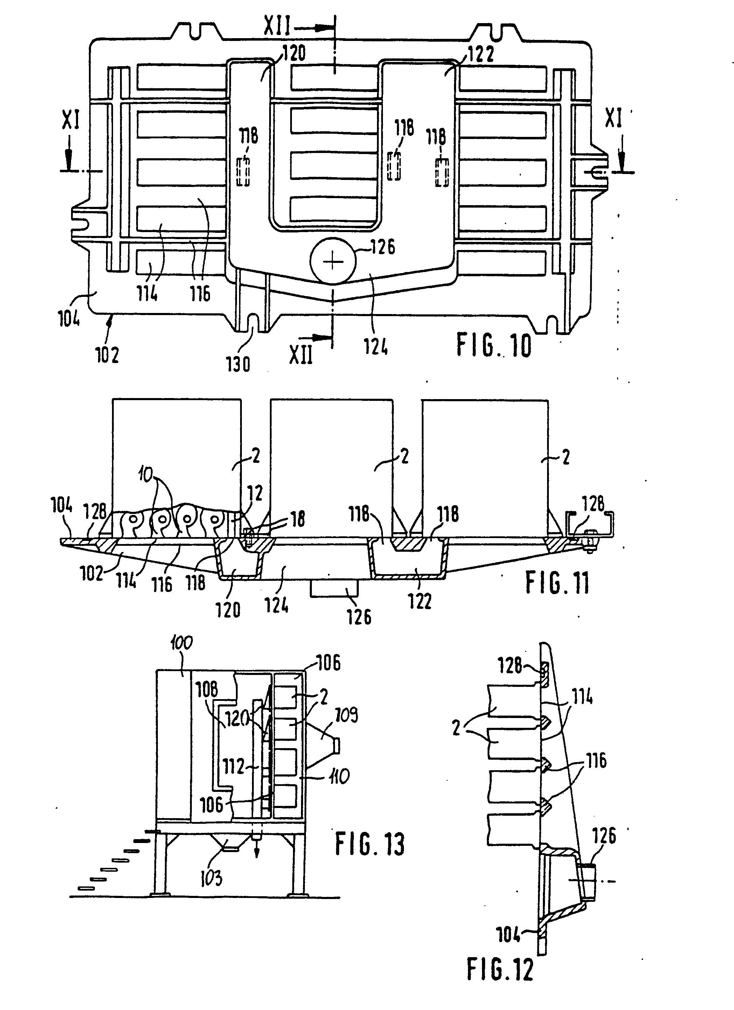

Die im nachstehenden zu beschreibenden Abscheider arbeiten mit Abscheiderelementen 2, die in ihrem wesentlichen Aufbau aus der DE-A-32 03 498, insbesondere Fig. 12 und 13 bekannt sind. Die Abscheiderelemente 2 sind dementsprechend mit einer Mehrzahl von Strömungskanälen 4 und mit jeweils einer Mehrzahl von zylindrischen Wirbelkammern 6 versehen. Die Wirbelkammern grenzen jeweils an die Strömungskanäle mit einer Abströmkante und einer Anströmkante. Zwischen Abströmkante und Anströmkante sind die Wirbelkammern auf einem Teil ihrer Wandfläche zum Strömungskanal offen. Die Wirbelkammern sind jeweils mit zwei Reingasaustrittsrohren 8 versehen, die koaxial in den Wirbelkammern angeordnet sind und sich jeweils von deren Endwänden aufeinander zu erstrecken. Der Querschnitt der Strömungskanäle reduziert sich in Strömungsrichtung von Wirbelkammer zu Wirbelkammer so, daß die Eintrittsgeschwindigkeit des Gasstroms in jede der aufeinanderfolgenden Wirbelkammern im wesentlichen gleich ist. Die Einlässe 10 der Strömungskanäle liegen in einer Anschlußebene 14, die im wesentlichen quer zu den Strömungskanälen liegt.

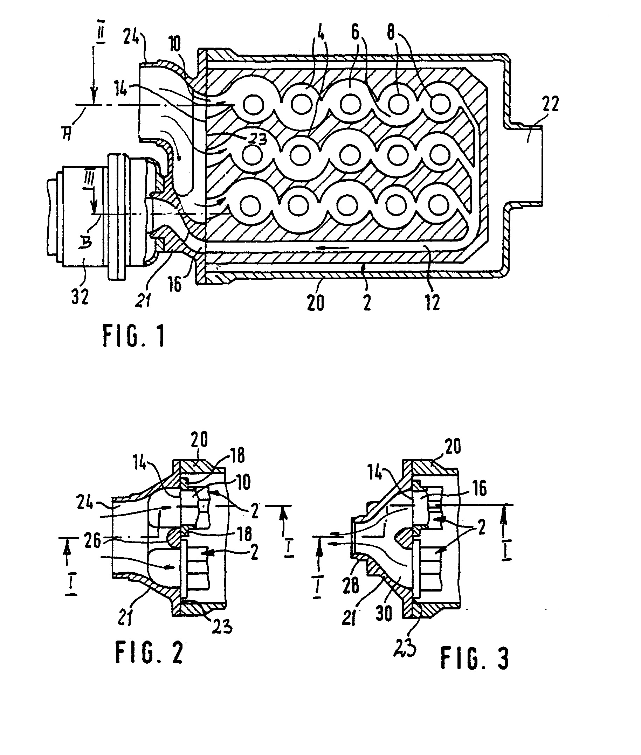

Abweichend von den bekannten Abscheiderelementen mit den vorstehend beschriebenen Merkmalen münden, wie in Fig. 1 dargestellt, hier die Strömungskanäle hinter der in Strömungsrichtung jeweils letzten Wirbelkammer in einen Restluftkanal 12, der innerhalb des Abscheiderelementes im wesentlichen parallel zu den Strömungskanälen 4 zu der Anschlußebene 14 des Abscheiderelementes zurückgeführt ist und in dieser eine Mündung 16 aufweist, die im Abstand von den Einlässen 10 der Strömungskanäle 4 liegt.

Die Strömungskanäle in dem Abscheiderelement können in bekannter Weise wellenförmig gekrümmt sein und die Wirbelkammern dabei jeweils im konkaven Bereich der Strömungskanäle an diese angeschlossen sein. Zweckmäßig ist das Abscheiderelement in seiner Längsrichtung quer zur Achse der Wirbelkammern geteilt, und zwar vorzugsweise symmetrisch. Die Rohre 8 bestehen zweckmäßig mit den Teilen des Abscheiderelementes aus einem Stück.

Zur Befestigung der Abscheiderelemente in dem Abscheider sind an die Anschlußebene 14 angrenzend an den Längsseiten des im Querschnitt rechteckigen Abscheiderelementes Befestigungsflansche 18 vorgesehen, mit denen die Abscheiderelemente an dem Gehäuse eines Ein-/Auslaßverteilers 21 befestigt sind.

Wie aus den Fig. 2 und 3 ersichtlich, sind an dem Verteiler 21 nebeneinander zwei Abscheiderelemente 2 so angeordnet, daß sie mit ihren Breitseiten parallel zueinander stehen. Die Abscheiderelemente werden außen mit Abstand von einem Gehäuse 20 eingeschlossen, das dichtend mit dem Verteiler 21 verbunden ist, und zwar vorzugsweise in der gleichen Ebene, in der die Abscheiderelemente an den Verteiler angeschlossen sind. Das Gehäuse 20, in das die Reingasaustrittsrohre 8 der Abscheiderelemente frei münden, ist mit einem Reinluftauslaßstutzen 22 versehen, der hier an der dem Verteiler 21 gegenüberliegenden Endwand ausgebildet ist. Der Reinluftauslaßstutzen kann aber auch an jeder anderen Stelle angeordnet werden. Die Anordnung richtet sich im wesentlichen nach den jeweiligen Platzverhältnissen.

Der Verteiler 21 ist mit einem Rohlufteinlaßstutzen 24 versehen, der sich zur Anschlußebene 14 hin nach unten erstreckt, so daß die gesamte Höhe der Einlässe 10 der Strömungskanäle 4 überdeckt wird. Mittig ist der Einlaßstutzen an die Anschlußebene 14 anschließend mit einer Trennrippe 26 versehen, gegen die die beiden Abscheiderelemente mit ihren beiden benachbarten Längsseiten abdichtend anliegen und an der sie über die Befestigungsflansche 18 dichtend gehaltert sind.

Unterhalb des Rohlufteinlaßstutzens 24 ist ein Restgasauslaßstutzen 28 ausgebildet, der über einen hosenförmigen Verteiler 30 mit den Mündungen 16 der Restluftkanäle 12 der beiden Abscheiderelemente 2 in Verbindung steht. Bei der Ausführungsform ist auf den Auslaßstutzen 28 aufgesetzt ein Absauggebläse 32 dargestellt. Über dieses Absauggebläse wird die mit Staub angereicherte Restluft abgesaugt und abgeführt. Ein weiteres nicht dargestelltes Gebläse ist zur Förderung der Rohluft durch die Filterelemente dem Einlaßstutzen 24 vorgeschaltet. Bei der dargestellten Ausführungsform liegen Einlaßstutzen 24 und Auslaßstutzen innerhalb der Projektion des Querschnittes des Gehäuses 20, wodurch eine sehr kompakte Bauweise erreicht wird. Der hosenförmige Verteiler 30 könnte selbstverständlich auch horizontal oder nach unten gerichtet angeordnet sein. Wesentlich ist es, daß sowohl die Rohluftzufuhr als auch die Abfuhr der Restluft mit dem darin angereicherten Staub auf der gleichen Seite des Gehäuses 20 angeordnet sind, wodurch sich bei vielen Anwendungsfällen komplizierte Rohrleitungen erübrigen.

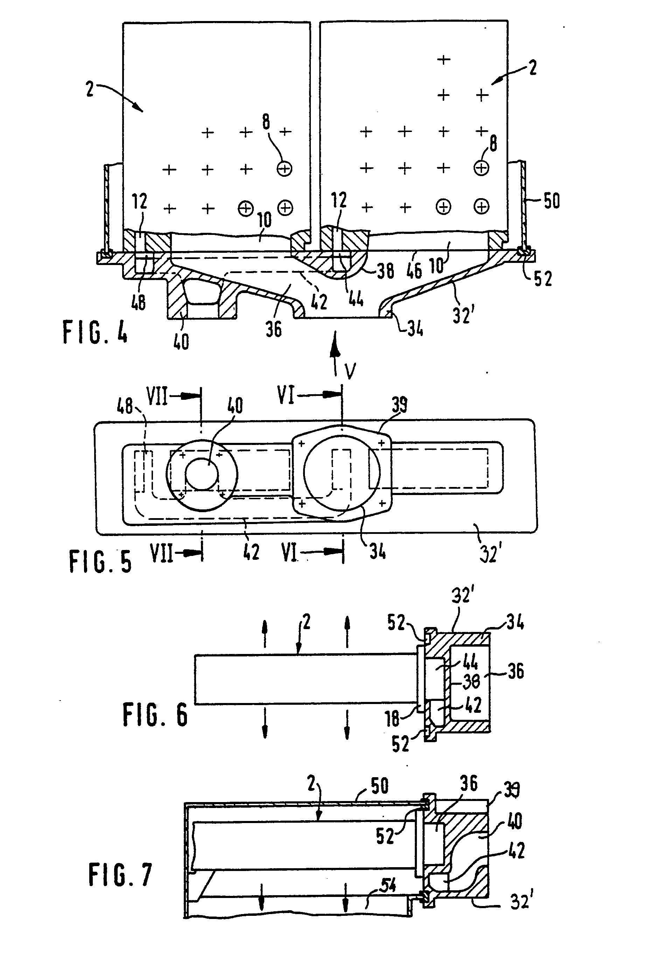

Bei der Ausführungsform nach Fig. 4 bis 7 sind wiederum zwei Abscheiderelemente 2 vorgesehen, die im wesentlichen in gleicher Weise ausgebildet sind wie die vorstehend beschriebenen Abscheiderelemente mit an die Anschlußseite angrenzenden Rohlufteinlässen 10 und jeweils einem in der gleichen Ebene mündenden Restluftkanal 12. Die beiden Abscheiderelemente 2 sind hier mit ihren Breitseiten in einer Ebene angeordnet, d.h. sie grenzen mit ihren Schmalseiten aneinander, so daß ein extrem flach bauender Abscheider erzielt wird.

Der Einlaß-Auslaß-Verteiler 32 ist hier mit einem Einlaßstutzen 34 versehen, der in einen hosenförmigen Kanal 36 übergeht mit einer mittleren Trennrippe 38 zwischen den Rohlufteinlässen 10 der beiden Abscheiderelemente 2. Neben dem Einlaßstutzen 34, der in Fig. 5 mit einem Anschlußflansch 39 dargestellt ist, ist hier wiederum ein Auslaßstutzen 40 vorgesehen, der gleichfalls mit einem Befestigungsflansch dargestellt ist und der mit einem unterhalb der Ebene der Anschlußseiten der Abscheiderelemente 2 geführten Restluftsammelkanal 42 in Verbindung steht, der in dem Verteiler 32' unterhalb des hosenförmigen Einlaßkanals 36 für die Rohluft geführt ist.

Der Restluftsammelkanal 42, hat wie aus Fig. 5 ersichtlich, einen im wesentlichen U-förmig, en Verlauf, wobei der in Fig. 5 rechte Schenkel 44 sich im Bereich der Trennrippe 38 nach oben erstreckt und mit einer in der Anschlußebene 46 mündenden Öffnung versehen ist, die vor der Mündung des Restluftkanals 12 des rechten Abscheiderelementes liegt. Der zweite Schenkel 48 des Restluftsammelkanals 42 erstreckt sich links vom Auslaßstutzen 40 nach oben und weist gleichfalls eine zur Anschlußebene gerichtete Öffnung auf, die vor der Mündung des Restluftkanals 12 des linken Abscheiderelementes 2 liegt. Es ist auch möglich, die beiden nach oben gerichteten Schenkel 44 und 48 nebeneinander im Bereich der Rippe 38 vorzusehen und die Abscheiderelemente so einzusetzen, daß ihre Restluftkanäle benachbart sind.

Die beiden Abscheiderelemente 2 sind wiederum von einem Gehäuse 50 umschlossen, das abdichtend gegen einen Umfangsflansch 52 des Verteilers 32 anliegt und, wie in Fig. 7 dargestellt, mit einer nach unten gerichteten Öffnung 54 versehen ist, durch die die Reinluft austritt. Diese Öffnung 54 kann eine direkte Verbindung zu dem mit der Reinluft zu versorgenden Raum oder Anschluß einer großvolumigen Reingasleitung sein. An die Anschlußflansche der Anschlußstutzen 34, 40 können direkt Gebläse angeflanscht sein. Es können aber auch Rohrleitungen angeschlossen werden.

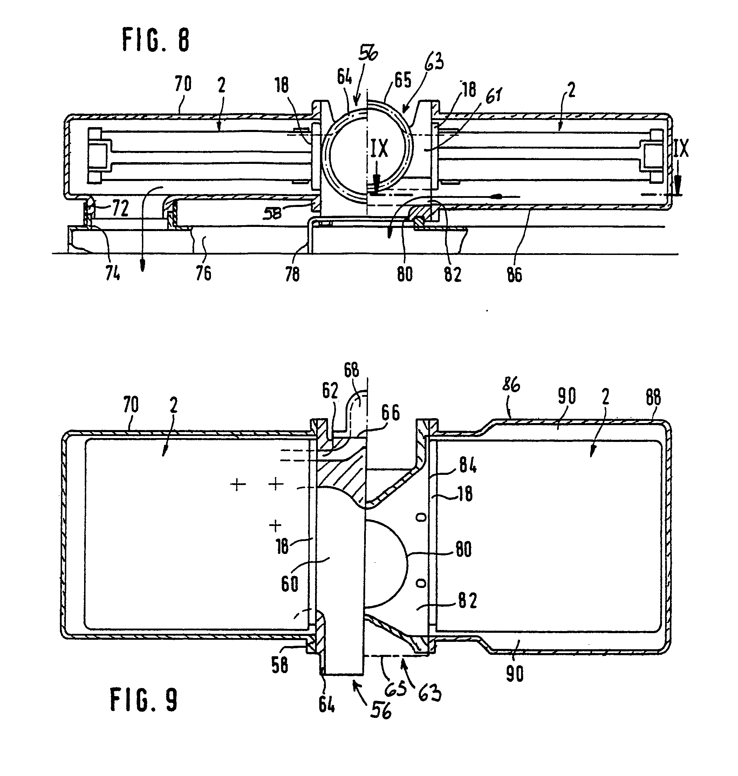

In den Fig. 8 und 9 sind zwei Ausführungsformen von Anschluß- und Verteilergehäusen dargestellt, die mittig zwischen zwei mit ihren Rohlufteinlässen bzw. Restluftauslässen einander zugekehrten Abscheiderelementen angeordnet sind. Die beiden Figuren zeigen zwei verschiedene Ausführungsformen, wobei links eine Ausführungsform mit getrennter Reinluftabfuhr für jedes der beiden Abscheiderelemente vorgesehen ist, während rechts eine Ausführungsform mit zentraler Reinluftabfuhr dargestellt ist. Die Anschluß- und Verteilergehäuse sind zur Mittellinie spiegelsymmetrisch ausgebildet.

Bei der links dargestellten Ausführungsform ist das zentral angeordnete Verteilergehäuse 56 beidseitig mit ebenen Anschlußflächen 58 versehen, die parallel zueinander liegen und in denen jeweils ein Rohlufteinlaß 60 und ein Restluftauslaß 62 liegen. Der Rohlufteinlaß 60 steht mit einem Einlaßstutzen 64 in Verbindung, der an einem Ende des Gehäuses 56 angeordnet ist. Dem Einlaßstutzen 64 gegenüber ist ein Auslaß 66 vorgesehen, mit dem die beiden einander gegenüberliegenden Restluftauslässe 62 verbunden sind. Dieser Auslaß 66 mündet bei dem dargestellten Ausführungsbeispiel koaxial bzw. achsparallel mit bzw. zu dem Einlaßstutzen 64. Das Verteilergehäuse ist hier mit einem vor dem Auslaß 66 angeflanschten Auslaßstutzen 68 mit nach unten gerichtetem Auslaß dargestellt.

Auf der Unterseite eines beidseitig an das Verteilergehäuse 56 und das Abscheiderelement angeschlossenen Gehäuses 70 ist ein Reinluftauslaßstutzen 72 vorgesehen, der hier in einen Anschlußstutzen 74 eines Gehäuses 76 mündet, auf dem der Abscheider über einen Tragbügel 78 aufgelagert und befestigt ist. Bei der beschriebenen Ausführungsform ist der spiegelbildlich rechts der Mittellinie vorgesehene Reinluftauslaßstutzen in gleicher Weise mit dem Gehäuse 76 verbunden.

Bei der Ausführungsform rechts der Mittellinie ist das Verteilergehäuse 63 im wesentlichen in gleicher Weise ausgebildet wie bei der links der Mittellinie dargestellten und im vorstehenden beschriebenen Ausführungsform. Die Anschlußstutzen 65 liegen hier jedoch etwas höher. Unterhalb der beidseitig im verteilergehäuse 63 vorgesehenen Rohluftzufuhrkanäle 61, die mit dem Anschlußstutzen 65 in Verbindung stehen, ist hier ein zentraler Reinluftauslaßstutzen 80 vorgesehen, der über einen Sammelkanal 82 mit einer quer liegenden Öffnung 84 in den einander gegenüberliegenden Anschlußwänden des Verteilergehäuses 56 in Verbindung steht. Diese Öffnung 84 steht jeweils mit dem Inneren des das Abscheiderelement einschließenden Gehäuses 88 in Verbindung, das hier, wie in Fig. 8 rechts dargestellt, eine etwas höhere Bauhöhe hat, um den notwendigen Strömungsquerschnitt an derUnterseite des Abscheiderelementes zur Verfügung zu haben. Das Gehäuse 86 ist hier so ausgebildet, daß seine dem Verteilergehäuse entgegengesetzt liegende Endwand 88 unmittelbar gegen die Endwand des Abscheiderelementes 2 anliegt. Der notwendige Strömungsquerschnitt für die auf der Oberseite austretende Reinluft wird hier durch eine beidseitige Verbreiterung 90 des Gehäuses 86 erreicht. Bei der Ausführungsform auf der linken Seite liegt das dem Verteilergehäuse 56 abgewandte Ende des Abscheiderelementes im Abstand von der Gehäuseendwand, so daß hier ein ausreichender Strömungsquerschnitt für die oben austretende Reinluft zur Verfügung steht.

In den Fig. 10 bis 12 ist ein Halte- und Verteilerelement 102 für den Aufbau einer Großabscheideranlage dargestellt, die in einem Container 100 untergebracht ist. Das Verteilerelement 102 ist als Platte 104 ausgebildet, die abdichtend in eine Öffnung in einer Wand 106 einsetzbar ist, die in dem Container 100 eine Kammer 108, in die Rohluft gefördert wird, von einer Kammer 105 trennt, in die die Reinluft austritt. In Fig. 13 ist beispielsweise ein Querschnitt durch einen derartigen Container dargestellt. In Öffnungen in der Wand 106 sind hier übereinander vier Halte- und Verteilerelemente 102 eingesetzt, wie sie in den Fig. 10 bis 12 dargestellt sind. In den Raum 108 links der Trennwand 106 wird über ein nicht dargestelltes Gebläse über den hier an der Unterseite des Containers dargestellten Anschluß die staubhaltige Rohluft eingeblasen oder angesaugt, während Reinluft aus den Abscheiderelementen in die rechts der Trennwand 106 liegende Reinluftsammelkammer 110 austritt, die mit einem Reinluftauslaß 109 versehen ist. Die Restluftsammelkanäle des Halte- und Verteilerelementes 102 sind an eine gemeinsame Restluftauslaßleitung 112 angeschlossen, die beispielsweise durch den Boden des Containers dichtend nach außen geführt ist, wobei ein Gebläse für die Restluftförderung innerhalb des Raumes 108, aber auch außerhalb des Containers angeordnet sein kann.

An die Platte 104 ist auf der Rückseite eine Vielzahl von Abscheiderelementen 2 angeschlossen. Bei dem dargestellten Ausführungsbeispiel sind nebeneinander drei Reihen A, B und C von Abscheiderelementen jeweils mit ihren Breitseiten parallel zueinander angeordnet, wobei in den Reihen A und C jeweils fünf Abscheiderelemente und in der Reihe B vier Abscheiderelemente vorgesehen sind. In der Platte 104 sind fensterartige Öffnungen 114 vorgesehen, die über Stege 116 voneinander getrennt sind. Diese Öffnungen 114 sind im wesentlichen deckungsgleich mit den Rohlufteinlässen 10 der Abscheiderelemente. Neben den Einlaßfenstern 114 sind jeweils Öffnungen 118 vorgesehen, von denen in der Zeichnung für jede der Reihen A bis C nur eine Öffnung beispielsweise dargestellt ist. Diese Öffnung deckt sich jeweils mit der Mündung des Restluftkanals der Abscheiderelemente 2. In den Reihen B und C liegen diese Öffnungen 118 benachbart, d.h. die Abscheiderelemente sind hier so angeordnet, daß die Restluftauslaßkanäle an ihren benachbarten Längsrändern verlaufen. Auf der Vorderseite der Platte 104 sind im Abstand zwei Restluftsammelkanäle 120, 122 vorgesehen, die an ihrem unteren Ende miteinander verbunden sind und innerhalb der horizontalen Verbindung 124 mit einem Restluftauslaßstutzen 126 versehen sind. Dieser Restluftauslaßstutzen 126 kann, wie dargestellt, mit einer horizontalen Achse ausgebildet sein. Er kann aber auch nach unten geneigt sein. Die Anschlußstutzen 126 mehrerer Platten stehen, wie in Fig. 13 veranschaulicht, mit der gemeinsamen Restluftabfuhrleitung 112 in Verbindung. Über die fensterartigen Öffnungen 116 kann die Rohluft aus dem Raum 108 direkt in die Abscheiderelemente eintreten.

Zur abdichtenden Befestigung des Verteilerelementes 102 auf der Wand 106 ist auf der Rückseite der Platte 104 eine umlaufende Dichtungsnut 128 vorgesehen, und es sind weiter am Rande Langlöcher 130 zur Aufnahme von Befestigungsschrauben vorgesehen. Die gesamte Platte ist zur Erhöhung der Steifigkeit verrippt. Die Abscheiderelemente sind, wie aus Fig. 11 ersichtlich, mit ihren Befestigungsflanschen 18 gegen die Rückseite der Platte 104 angeschraubt.

**Patentansprüche**

1. Abscheiderelement (2) zum Abscheiden von in einem Gasstrom suspendierten Feststoffen mittels Fliehkraft mit einer Mehrzahl von parallelen Strömungskanälen (4) und einer Mehrzahl von zylindrischen Wirbelkammern (6), die jeweils an die Strömungskanäle mit einer Abströmkante und einer Anströmkante angrenzen und zwischen diesen auf einem Teil ihrer Wandfläche zum Strömungskanal offen sind, und mit jeweils zwei Reingasaustrittsrohren (18) in den Wirbelkammern, die koaxial in den Wirbelkammern angeordnet sind und sich jeweils von deren Endwänden aufeinander zu erstrecken, wobei der Querschnitt der Strömungskanäle in Strömungsrichtung von Kammer zu Kammer so reduziert ist, daß die Eintrittsgeschwindigkeit des Gasstroms in jede der Wirbelkammern im wesentlichen gleich ist, und wobei die Einlässe aller Strömungskanäle in einer Eingangsebene (14) angeordnet sind, die im wesentlichen quer zu den Strömungskanälen liegt, und die Strömungskanäle hinter der in Strömungsrichtung jeweils letzten Wirbelkammer in einen Restluftkanal (12) münden, dadurch gekennzeichnet, daß der Restluftkanal (12) innerhalb des Abscheiderelementes (2) parallel zu den Strömungskanälen (4) liegend zu der Eingangsebene (14) des Abscheiderelementes (2) zurückgeführt ist und in dieser im Abstand von den Einlässen (10) der Strömungskanäle in einen an die Eingangsebene angrenzenden Befestigungs- und/oder Dichtungsflansch (18) mündet.

2. Abscheider mit Abscheiderelementen (2) nach Anspruch 1, von denen eine Mehrzahl nebeneinander mit ihrer Eingangsebene (14; 46) an einer ebenen Fläche eines Verteilergehäuses (21; 32') befestigt ist, die mit Durchlässen zu den Einlässen (10) der Strömungskanäle versehen ist und bei dem ein die Abscheiderelemente umschließendes Gehäuse (20; 50) mit einem Reinluftauslaß (22) vorgesehen ist, dadurch gekennzeichnet, daß in der ebenen Fläche zusätzlich Durchlässe (16; 44, 48) vorgesehen sind, die mit den Auslässen der Restluftkanäle (12) der Abscheiderelemente (2) in Verbindung stehen, und die mit einem gemeinsamen Restluftauslaß (30; 42) in Verbindung stehen.

3. Abscheider nach Anspruch 2, dadurch gekennzeichnet, daß das Verteilergehäuse (56; 63) mit voneinander weg gerichteten, im wesentlichen parallelen Flächen (58; 84) versehen ist, an die die Abscheiderelemente (2) dichtend angeflanscht sind und die mit Durchlässen (60, 61) für den Rohlufteinlaß zu den Abscheiderelementen und Durchlässen (62) für den Auslaß der Restluft aus den Abscheiderelementen versehen sind, die jeweils mit einem Lufteinlaßkanal (64; 65) bzw. Restluftablaßkanal (66) im Verteilergehäuse in Verbindung stehen, daß für jedes der Abscheiderelemente (2) ein dieses umschließendes Gehäuse (70; 86) vorgesehen ist und daß ein Reinluftauslaß (72; 80) vorgesehen ist.

4. Abscheider nach Anspruch 3, dadurch gekennzeichnet, daß ein gemeinsamer Reinluftauslaß (80) im Verteilergehäuse (63) vorgesehen ist.

5. Abscheider nach Anspruch 3, dadurch gekennzeichnet, daß die die Abscheiderelemente (2) einschließende Gehäuse (70) an ihrer Unterseite jeweils mit einem Reinluftauslaßstutzen (72) versehen sind.

**Revendications**

1. Elément de séparation (2) pour séparer des particules solides en suspension dans un courant gazeux par force centrifuge comportant une pluralité de canaux d'écoulement parallèles (4) et une pluralité de chambres à tourbillon cylindriques (6), lesquelles sont respectivement en contact avec les canaux d'écoulement par l'intermédiaire d'une arête d'écoulement et d'une arête d'arrivée et sont ouvertes entre celles-ci sur une partie de leur paroi vers le canal d'écoulement et comportant dans les chambres à tourbillon respectivement deux tuyaux de sortie de gaz pur (8), qui sont coaxiaux dans les chambres à tourbillon et s'étendent, à partir des cloisons terminales de celles-ci, respectivement l'un au dessus de l'autre, cependant que la section transversale des canaux d'écoulement diminue dans la direction du courant de chambre en chambre de sorte que la vitesse d'entrée du courant gazeux est sensiblement la même dans chacune des chambres à tourbillon et tandis que les entrées de tous les canaux d'écoulement se situent dans un plan d'entrée (14), qui est pour l'essentiel transversal aux canaux d'écoulement et que les canaux d'écoulement débouchent respectivement dans la direction d'écoulement derrière la dernière chambre à tourbillon dans un canal d'air résiduel (12), caractérisé en ce que à l'intérieur de l'élément de séparation (2) parallèlement aux canaux d'écoulement (4), le canal d'air résiduel (12) revient au plan d'entrée (14) de l'élément de séparation (2) et débouche dans celui-ci à distance des entrées (10) des canaux d'écoulement dans une collerette de fixation et/ou d'étanchéité (18) contiguë au plan d'entrée.

2. Séparateur comportant des éléments de séparation (2) selon la revendication 1, une pluralité de ceux-ci étant fixés côte à côte par leur plan d'entrée (14, 46) sur une surface plane d'un bâti de répartiteur (21, 32), laquelle est pourvue de passages aux entrées (10) des canaux d'écoulement, séparateur dans lequel est prévu un bâti (20, 50) entourant les éléments de séparation et comportant une sortie de gaz pur (22), caractérisé en ce que des passages complémentaires (16, 44, 48) sont prévus dans la surface plane, lesquels sont reliés aux sorties des canaux d'air résiduel (12) des éléments de séparation (2) et à la sortie collective d'air résiduel (30, 42).

3. Séparateur selon la revendication 2, caractérisé en ce que le bâti de répartiteur (56, 63) est pourvu de surfaces parallèles pour l'essentiel (58, 84), dirigées à l'opposé l'une de l'autre, sur lesquelles les éléments de séparation (2) sont raccordés de manière étanche et qui sont pourvus de passages (60, 61) servant à l'entrée d'air brut dans les éléments de séparation et de passages (62) servant à la sortie de l'air résiduel venant des éléments de séparation, lesdits passages étant respectivement reliés dans le bâti de répartiteur avec un canal d'entrée d'air (64, 65) et un canal d'air résiduel (66), en ce que pour chacun des éléments de séparation (2) est prévu un bâti (70, 86) qui l'entoure et en ce qu'une sortie d'air pur (72, 80) est prévue.

4. Séparateur selon la revendication 3, caractérisé en ce qu'une sortie collective d'air pur (80) est prévue dans le bâti de répartiteur (63).

5. Séparateur selon la revendication 3, caractérisé en ce que les bâtis (70) entourant les éléments de séparation (2) sont respectivement reliés sur leur face inférieure à un manchon de sortie d'air pur (72).

**Claims**

1. A separator element (2) for separating solid matter suspended in a gas stream, by means of centrifugal force, having a plurality of parallel flow channels (4) and a plurality of cylindrical swirl chambers (6) which adjoin the flow channels with a flow-away edge and an approach flow edge in each case and, between these, are open to the flow channel over a portion of their wall surface, and having two clean-gas outlet pipes (8) in each of the swirl chambers, which are arranged coaxially in the swirl chambers and extend towards one another from the end walls in each case, the cross-section of the flow channel being so reduced from chamber to chamber in the direction of flow that the entering velocity of the gas stream into each of the swirl chambers is substantially the same, and wherein the inlets of all the flow channels are arranged in an entry plane (14) which lies substantially transversely to the flow channels, and the flow channels lead into a residual-air channel (12) behind the last swirl chamber in the flow direction in each case, characterised in that the residual-air channel (12) is taken back, inside the separator element (2), lying parallel to the flow channels (4), to the entry plane (14) of the separator element (2) and opens, in this plane, at a distance from the inlets (10) of the flow passages, into an attachment flange and/or sealing flange (18) adjoining the entry plane.

2. A separator having saparator elements (2) according to Claim 1, a plurality of which are secured side by side, by their entry planes (14; 46), to a plane surface of a distributor housing (21; 32') which is provided with passages to the inlets (10) of the flow channels, and wherein a housing (20) surrounding the separator elements is provided with a clean-air outlet (22), characterised in that provided in the plane surface are additional passages (16; 44, 48) which are in communication with the outlets of the residual-air passages (12) of the separator elements (2) and which are in communication with a common residual-air outlet (30; 42).

3. A separator according to Claim 2, characterised in that the distributor housing (56; 63) is provided with substantially parallel surfaces (58; 84) directed away from one another, on which the separator elements (2) are flange-mounted with a sealing action, and which are provided with passages (60, 61) for the admission of the untreated air to the separator elements and passages (62) for the outlet of the residual air from the separator elements, each of which passages is in communication with an air inlet channel (64, 65) or residual-air outlet channel (66) respectively in the distributor housing, that provided for each of the separator elements (2) is a housing (70; 86) surrounding it, and that a clean-air outlet (72; 80) is provided.

4. A separator according to Claim 3, characterised in that a common clean-air outlet (8) is provided in the distributor housing (63).

5. A separator according to Claim 3, characterised in that the housings (70) enclosing the separator elements (2) are each provided with a clean-air outlet socket (72) at their under side.

FIG. 1

FIG. 2

FIG. 3

FIG. 4

FIG. 5

FIG. 6

FIG. 7

FIG. 8

FIG. 9

XII

120    122

XI          118    118    118    XI

126

114  116

104

102      130      XII    124      FIG. 10

10                12

2        2        2

104  128              18
                      118    118        128
102  114  116  118
        120    124      126    122        FIG. 11

100

106
108
120        2
112        109
106        110

103                FIG. 13

128
2        114
        116
        126
104

FIG. 12